# EUROPÄISCHE PATENTSCHRIFT

(11) **EP 4 431 287 B1**
(45) Veröffentlichungstag und Bekanntmachung des Hinweises auf die Patenterteilung: **26.11.2025**
(21) Anmeldenummer: 23161781.2
(22) Anmeldetag: 14.03.2023
(51) Int. Cl.: B41J 2/045

(54) **VERFAHREN ZUM EINSTELLEN EINER TROPFENFORM IN EINEM DRUCKPROZESS**
METHOD FOR ADJUSTING A DROP SHAPE IN A PRINTING PROCESS
PROCÉDÉ DE RÉGLAGE D'UNE FORME DE GOUTTES DANS UN PROCESSUS D'IMPRESSION

(43) Veröffentlichungstag der Anmeldung: 18.09.2024
(73) Patentinhaber: Ivoclar Vivadent AG, 9494 Schaan (LI)
(72) Erfinder: Bitar, Nicola, 9462 Montlingen (CH); Reinhardt, Jonas, 7206 Igis (CH); Niedrig, Christian, 9478 Azmoos (CH); Renner, Johannes, 3072 Ostermundingen (AT)
(74) Vertreter: Baldus, Oliver

(56) Entgegenhaltungen:
- US-A- 5 646 654
- US-A1- 2001 028 371
- US-A1- 2004 017 412
- US-A1- 2013 321 507

## Beschreibung

### BESCHREIBUNG

Die vorliegende Erfindung betrifft ein Verfahren zum Einstellen einer Tropfenform in einem Druckprozess und eine Druckvorrichtung zum Durchführen des Verfahrens. Ein beispielhaftes Verfahren ist aus US 5 646 654 A bekannt.

Es ist die technische Aufgabe der vorliegenden Erfindung, die Tropfenform einer Druckflüssigkeit in einem Druckprozess so einzustellen, dass der Druckprozess präzise und effizient durchgeführt werden kann.

Diese Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Einstellen einer Tropfenform in einem Druckprozess gelöst, mit den Schritten eines Steuerns eines Piezoelementes einer Druckdüse durch ein erstes Spannungsprofil; eines Erfassens eines über das erste Spannungsprofil gemittelten elektrischen Stromwertes oder einer über das erste Spannungsprofil gemittelten Schallamplitude; eines Steuerns des Piezoelementes der Druckdüse durch ein zweites Spannungsprofil; eines Erfassens eines über das zweite Spannungsprofil gemittelten elektrischen Stromwertes oder einer über das zweite Spannungsprofil gemittelten Schallamplitude; und eines Auswählens desjenigen Spannungsprofils mit dem geringeren erfassten Stromwert oder der geringeren erfassten Schallamplitude. Durch das Verfahren kann eine automatische Abstimmung des Spannungsprofils für eine optimale Tropfenform erreicht werden. Ein selbstständiges Autotuning eines Druckkopfes wird ermöglicht. Auf aufwändige Geräte zur Bestimmung einer Tropfenform der ausgestoßenen Druckflüssigkeit kann verzichtet werden. Zudem verringert sich ein Zeitaufwand zur Einstellung der Tropfenform.

In einer technisch vorteilhaften Ausführungsform des Verfahrens wird das zweite Spannungsprofil auf Basis des ersten Spannungsprofils bestimmt. Dadurch wird beispielsweise der technische Vorteil erreicht, dass das zweite Spannungsprofil auf einfache Weise erzeugt werden kann.

In einer weiteren technisch vorteilhaften Ausführungsform des Verfahrens wird das zweite Spannungsprofil dadurch erzeugt, dass eine Anstiegszeit des ersten Spannungsprofils verkleinert oder vergrößert wird. Dadurch wird beispielsweise der technische Vorteil erreicht, dass ein lokales Minimum für den Stromwert oder die Schallamplitude gefunden werden kann, das eine geeignete Anstiegszeit angibt.

In einer weiteren technisch vorteilhaften Ausführungsform des Verfahrens wird das zweite Spannungsprofil dadurch erzeugt, dass eine Abfallzeit des ersten Spannungsprofils verkleinert oder vergrößert wird. Dadurch wird beispielsweise der technische Vorteil erreicht, dass ein lokales Minimum für den Stromwert oder die Schallamplitude gefunden werden kann, das eine geeignete Abfallzeit angibt.

In einer weiteren technisch vorteilhaften Ausführungsform des Verfahrens wird das zweite Spannungsprofil dadurch erzeugt, dass eine Haltezeit des ersten Spannungsprofils verkleinert oder vergrößert wird. Dadurch wird beispielsweise der technische Vorteil erreicht, dass ein lokales Minimum für den Stromwert oder die Schallamplitude gefunden werden kann, das eine geeignete Haltezeit angibt.

In einer weiteren technisch vorteilhaften Ausführungsform des Verfahrens wird das zweite Spannungsprofil dadurch erzeugt, dass eine Haltespannung des ersten Spannungsprofils verkleinert oder vergrößert wird. Dadurch wird beispielsweise der technische Vorteil erreicht, dass ein lokales Minimum für den Stromwert oder die Schallamplitude gefunden werden kann, das eine geeignete Haltespannung angibt.

In einer weiteren technisch vorteilhaften Ausführungsform des Verfahrens wird das zweite Spannungsprofil dadurch erzeugt, dass eine Haltespannung des ersten Spannungsprofils unverändert bleibt. Dadurch wird beispielsweise der technische Vorteil erreicht, dass sich der Parameterraum für das Spannungsprofil verkleinert und dieses mit geringerem Aufwand ermittelt werden kann.

In einer weiteren technisch vorteilhaften Ausführungsform des Verfahrens wird das zweite Spannungsprofil dadurch erzeugt, dass eine Haltezeit des ersten Spannungsprofils unverändert bleibt. Dadurch wird beispielsweise ebenfalls der technische Vorteil erreicht, dass sich der Parameterraum für das Spannungsprofil verkleinert und dieses mit geringerem Aufwand ermittelt werden kann.

In einer weiteren technisch vorteilhaften Ausführungsform des Verfahrens ist das erste Spannungsprofil ein vorgegebenes Spannungsprofil. Dadurch wird beispielsweise der technische Vorteil erreicht, dass das Verfahren von einem vorab festgelegten und besonders geeigneten Spannungsprofil begonnen werden kann.

In einer weiteren technisch vorteilhaften Ausführungsform des Verfahrens wird eine Vielzahl von vorgegebenen Spannungsprofilen gespeichert. Dadurch wird beispielsweise der technische Vorteil erreicht, dass für unterschiedliche Druckflüssigkeiten unterschiedliche Spannungsprofile verwendet werden können.

In einer weiteren technisch vorteilhaften Ausführungsform des Verfahrens wird das erste und/oder zweite Spannungsprofil aus der Vielzahl von vorgegebenen Spannungsprofilen ausgewählt. Dadurch wird beispielsweise der technische Vorteil erreicht, dass die Auswahl eines Spannungsprofils je nach Druckflüssigkeit erfolgen kann. Durch die Verwendung von geeigneten Spannungsprofilen je nach Druckflüssigkeit kann das Verfahren schneller konvergieren und durchgeführt werden.

In einer weiteren technisch vorteilhaften Ausführungsform des Verfahrens wird das Verfahren durchgeführt, wenn die Druckflüssigkeit im Druckkopf oder Drucksystem gewechselt wird oder wenn eine vorgegebene Zeit abgelaufen ist. Dadurch wird beispielsweise der technische Vorteil erreicht, dass bei einem Wechsel der Druckflüssigkeit automatisch ein geeignetes Spannungsprofil zum Einstellen der Flüssigkeitstropfen erhalten wird oder eine Alterung des Druckkopfes und dessen Komponenten kompensiert werden kann. Zudem können die Spannungsprofile an die rheologischen Veränderungen der Druckflüssigkeit angepasst werden, wie beispielsweise bei Temperaturschwankungen der Umgebung oder einer Erhitzung der Anlage während dem Betrieb.

In einer weiteren technisch vorteilhaften Ausführungsform des Verfahrens ist das Verfahren ein dreidimensionales Druckverfahren zum Aufbauen eines räumlichen Objektes. Dadurch wird beispielsweise der technische Vorteil erreicht, dass besonders geeignete Spannungsprofile für Druckflüssigkeiten erhalten werden, die zum schichtweisen Aufbauen des räumlichen Objektes verwendet werden.

In einer weiteren technisch vorteilhaften Ausführungsform des Verfahrens wird der Druckkopf durch eine Verschlussplatte abgedeckt. Dadurch wird beispielsweise der technische Vorteil erreicht, dass keine Druckflüssigkeit während des Verfahrens verschwendet wird.

Gemäß einem zweiten Aspekt wird die technische Aufgabe durch eine Druckvorrichtung gelöst, die ausgebildet ist, das Verfahren nach dem ersten Aspekt auszuführen. Durch die Druckvorrichtung werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: eine schematische Querschnittsansicht eines Druckkopfes;
- Fig. 2: eine schematische Ansicht unterschiedlicher Tropfen einer Druckflüssigkeit;
- Fig. 3: eine schematische Ansicht eines Spannungsprofils zum Ansteuern eines Piezoelements;
- Fig. 4: einen mittleren erfassten Stromwert bei variierender Abfallzeit;
- Fig. 5: einen mittleren erfassten Stromwert bei variierender Wartezeit;
- Fig. 6: einen mittleren erfassten Stromwert bei variierender Anstiegszeit;
- Fig. 7: eine schematische Ansicht einer Verschlussplatte für einen Druckkopf; und
- Fig. 8: ein Blockdiagramm eines Verfahrens zum Einstellen einer Tropfenform.

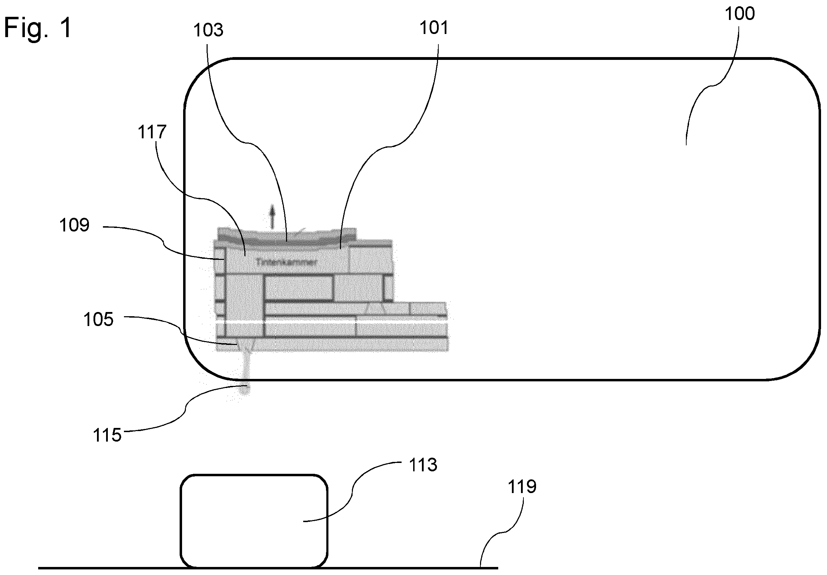

Fig. 1 zeigt eine schematische Querschnittsansicht eines steuerbaren Druckkopfes 109 einer Druckvorrichtung 100. Die Druckvorrichtung 100 verwendet einen Strahl von Flüssigkeitstropfen 115 für einen Druckprozess (Inkjet-Verfahren). Der Druckprozess kann ein zweidimensionaler Druckprozess zum Erzeugen von Bildern durch das Aufbringen von Tinte sein oder ein dreidimensionaler Druckprozess zum Erzeugen von räumlichen Objekten 113, die durch eine Druckflüssigkeit 101 erzeugt werden, die schichtweise auf einer Bauplattform 119 akkumuliert.

Für das Ausstoßen der Druckflüssigkeit 101 ist in dem Druckkopf 109 der Druckvorrichtung 100 zumindest ein Piezoelement 103 verbaut, das einen elektrischen Spannungsimpuls in eine Bewegung umsetzt und auf die Druckflüssigkeit 101 in der Tintenkammer 117 überträgt. Die Bewegung des Piezoelements 103 wird durch den inversen piezoelektrischen Effekt erreicht, der bewirkt, dass das Piezoelement 103 bei einer negativen Spannung eine Abwärtsbewegung (Fall) und bei einer positiven Spannung eine Aufwärtsbewegung (Rise) erzeugt.

Zum Ansteuern der Piezoelemente 103 wird ein Spannungsprofil verwendet, das verschiedene Abschnitte aufweist. Je nach Spannungsprofil und verwendeter Druckflüssigkeit 101 entstehen unterschiedlich ausgebildete Flüssigkeitstropfen 115.

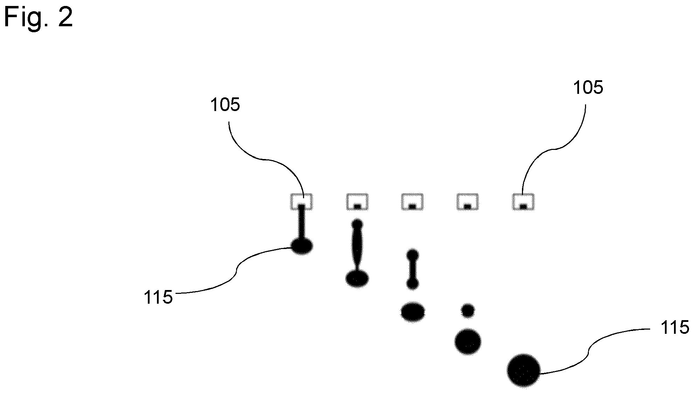

Fig. 2 zeigt eine schematische Ansicht unterschiedlicher Flüssigkeitstropfen 115 der Druckflüssigkeit 101. Durch das verwendete Spannungsprofil 107 sollten homogene Flüssigkeitstropfen 115 erzeugt werden, ohne dass langgezogene Tropfen, Sprüheffekte oder Satellitentropfen entstehen. Satellitentropfen sind kleine Flüssigkeitstropfen 115 neben dem Haupttropfen (Doppeltropfen), die sich chaotisch ablagern und das Druckbild verschlechtern. Eine Kontamination der Druckflüssigkeit in das Druckbild oder Aufbaumaterial der anderen sollte vermieden werden.

Idealerweise wird durch das verwendete Spannungsprofil 107 ein einziger kugelförmiger Flüssigkeitstropfen 115 erzeugt, der sich mit einer vorgegebenen Geschwindigkeit bewegt, wie beispielsweise 4 bis 9 m/s. Um dies zu erreichen, wird das Spannungsprofil 107 entsprechend angepasst (Wave Tuning).

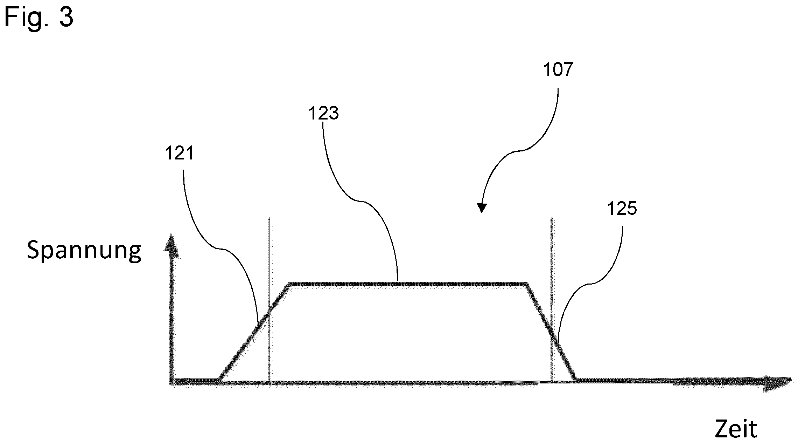

Fig. 3 zeigt eine schematische Ansicht eines trapezförmigen Spannungsprofils 107 zum Ansteuern des Piezoelements 103. Das Spannungsprofil 107 wird durch eine elektronische Steuereinheit mit einer elektrischen Schaltung erzeugt und kann als vorab vorgegebenes Spannungsprofil 107 in der Druckvorrichtung 100 abgelegt sein. Hierzu können die Daten des Spannungsprofils 107 digital in der Steuereinheit gespeichert werden. Die Steuereinheit kann auch eine Vielzahl von vorgegebenen Spannungsprofilen 107 speichern, von denen eines je nach verwendeter Druckflüssigkeit als Startpunkt für das Verfahren ausgewählt wird.

Das Spannungsprofil 107 umfasst drei Abschnitte, nämlich einen ersten Startabschnitt 121 mit einer Abfallzeit, in dem die elektrische Spannung ansteigt, einen zweiten Halteabschnitt 123 mit einer Wartezeit, in dem die elektrische Spannung konstant ist, und einen dritten Endabschnitt 125 mit einer Anstiegszeit, in dem die elektrische Spannung abfällt. Um eine geeignete Tropfenform zu erzeugen, werden die jeweiligen Abschnitte 121, 123 und 125 verändert.

Dabei werden die Abfallzeit (Fall Time), Wartezeit (Waiting Time) und Anstiegszeit (Rise Time) der jeweiligen Abschnitte 121, 123 und 125 verändert und angepasst. Da sich jede Druckflüssigkeit 101 rheologisch unterscheidet, sollte für jede Druckflüssigkeit 101 jeweils ein entsprechend angepasstes Spannungsprofil 107 für den Druckprozess verwendet werden.

Die Abfallzeit (Fall Time) erzeugt eine Ziehbewegung (Pull) des Piezoelementes 103. Der Startabschnitt 121 setzt sich aus der Abfallzeit und einer Abfallspannung zusammen. Die Abfallspannung hat beispielsweise einen Einfluss auf die erzeugte Tropfengröße. Bei einer starken Veränderung der Abfallspannung sollte die Schallgeschwindigkeit der Druckflüssigkeit 101 nicht überschritten werden.

Die Wartezeit (Waiting Time) ist die Zeit bei einer konstanten Spannung im Halteabschnitt 123, in der die Druckflüssigkeit 101 relaxiert. Die Relaxation hängt mit der Schallgeschwindigkeit innerhalb der Druckflüssigkeit 101 zusammen. Das Ende der Wartezeit sollte möglichst genau mit der Relaxation der Druckflüssigkeit 101 in der Tintenkammer 117 des Druckkopfes 109 übereinstimmen, so dass zu diesem Zeitpunkt die Anstiegszeit synchron mit der Relaxationsbewegung beginnt.

Die Anstiegszeit (Rise Time) im Endabschnitt 125 erzeugt eine Stoßbewegung (Push) des Piezoelements 103. Die von der Abfallzeit erzeugte Bewegung der Druckflüssigkeit 101 und die in der Wartezeit entstehende Relaxation der Druckflüssigkeit 101 wird während der Anstiegszeit zusätzlich beschleunigt, so dass ein Flüssigkeitstropfen 115 aus der Tintenkammer 117 durch die Druckdüse 105 entweicht.

Die Amplitudenhöhe ist die Höhe der elektrischen Spannung während der Wartezeit und korreliert mit der Größe des ausgestoßenen Flüssigkeitstropfens 115. Bei einem Abstimmen des Spannungsprofils 107 kann eine konstante vorgegebene Spannung als Amplitudenhöhe verwendet werden.

Bei einem Abstimmen des Spannungsprofils 107 (Wave Tuning) werden unterschiedliche Spannungsprofile 107 mit unterschiedlicher Abfallzeit, Wartezeit, Anstiegszeit und Amplitudenhöhe erzeugt. Danach wird für die einzelnen Spannungsprofile 107 der elektrische Strom durch das Piezoelement 103 mit einem Amperemeter oder einer geeigneten elektrischen Schaltung bestimmt und über die Dauer des Spannungsprofils 107 gemittelt, beispielsweise durch Integrieren einzelner Stromwerte über die Zeit. Das Spannungsprofil 107 kann wiederholt mit einer Wiederholfrequenz auf das Piezoelement 103 angewendet werden, um während dieser Dauer den elektrischen Strom durch das Piezoelement 103 zu mitteln.

Statt dem elektrischen Strom durch das Piezoelement 103 kann auch die Schallamplitude verwendet werden, die durch das Piezoelement 103 erzeugt wird. Die so erfassten Werte für den elektrischen Strom oder die Schallamplitude werden anschließend für eine Auswahl eines der erzeugten Spannungsprofile 107 verwendet.

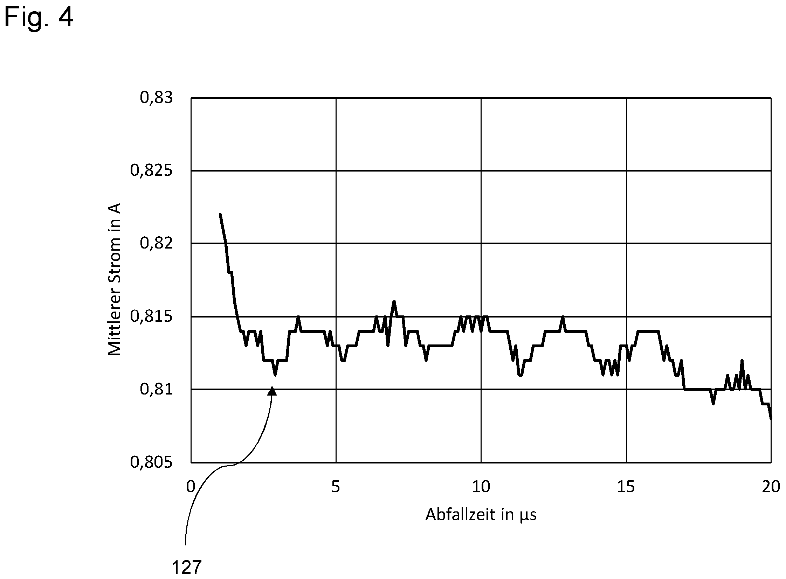

Fig. 4 zeigt einen mittleren erfassten Stromwert bei variierender Abfallzeit des Spannungsprofils 107. Die Spannungsprofile 107 weisen in diesem Fall eine konstante Wartezeit von 2.3 µs und eine konstante Anstiegszeit von 1 µs auf. Die Wiederholrate beträgt 15 kHz und der Durchfluss der Druckflüssigkeit 14 ml/min.

Die Abfallzeit des Spannungsprofils 107 wird hingegen zwischen 1 µs und 20 µs verändert (X-Achse). Hierbei wird ein vorgegebenes Spannungsprofil verwendet, dessen Abfallzeit von dem Minimalwert in kleinen Schritten bis zu dem Maximalwert erhöht wird. Zu jeder Abfallzeit wird der jeweilige zugehörige mittlere Stromwert erfasst (Y-Achse), der durch das Piezoelement 103 fließt. Alternativ kann auch die Schallamplitude mit einem Mikrofon ermittelt werden.

Anschließend wird das Spannungsprofil 107 mit derjenigen Abfallzeit ausgewählt, bei dem der mittlere Stromwert ein lokales Minimum 127 aufweist. Dieses tritt bei einer Abfallzeit von 2.9 µs auf. Dadurch verbessert sich die Tropfenform. Ab diesem Wert ist ein effizientes Spannungsprofil 107 möglich. Wenn diese Abfallzeit unterschritten wird, ist ein optimales Wirken des Spannungsprofils 107 nicht möglich, da die Schallgeschwindigkeit der Druckflüssigkeit überschritten wird. Die Strommessung kann auch als Leistungsmessung bezeichnet werden, weil die verwendete Spannung gleichbleibend und konstant ist, wie beispielsweise 24 V.

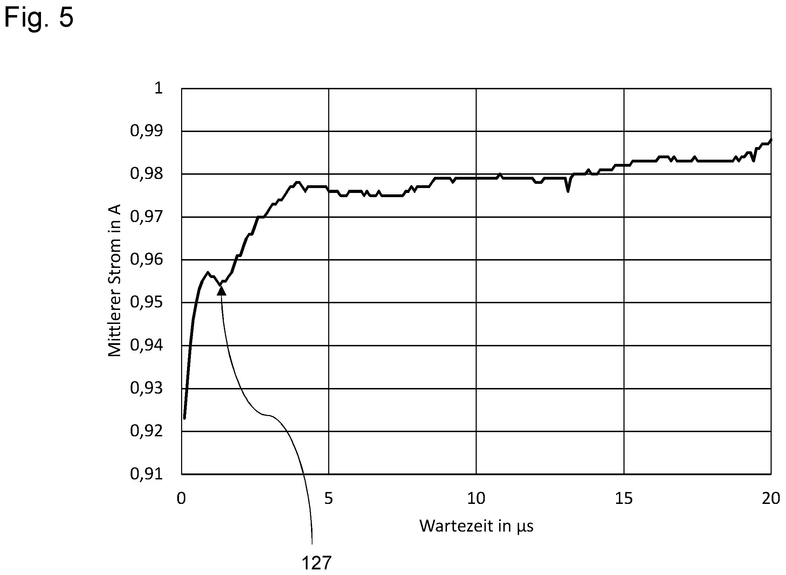

Fig. 5 zeigt einen mittleren erfassten Stromwert bei variierender Wartezeit des Spannungsprofils 107. Die Spannungsprofile 107 weisen eine konstante Abfallzeit von 2.3 µs und konstante Anstiegszeit von 1 µs auf. Die Wiederholrate beträgt 20 kHz.

Die Wartezeit des Spannungsprofils 107 wird hingegen zwischen 0 µs und 20 µs verändert (X-Achse). Hierbei wird ein vorgegebenes Spannungsprofil 107 verwendet, dessen Wartezeit von dem Minimalwert in kleinen Schritten bis zu dem Maximalwert erhöht wird. Zu jeder Wartezeit wird der jeweilige zugehörige mittlere Stromwert erfasst (Y-Achse), der durch das Piezoelement fließt. Alternativ kann auch die Schallamplitude mit einem Mikrofon ermittelt werden.

Die Kurve weist bei einer Wartezeit von 1.3 µs ein lokales Minimum 127 für den mittleren Stromwert auf. Dieser Punkt hängt von der Relaxationsgeschwindigkeit innerhalb der Druckflüssigkeit 101 ab. Das lokale Minimum 127 gibt die optimale Zeit für die Wartezeit an, da hier am wenigsten Energie für die Erzeugung der Flüssigkeitstropfen 115 verbraucht wird. Dies bedeutet, dass die Relaxation der Druckflüssigkeit synchron mit der Anstiegszeit verläuft.

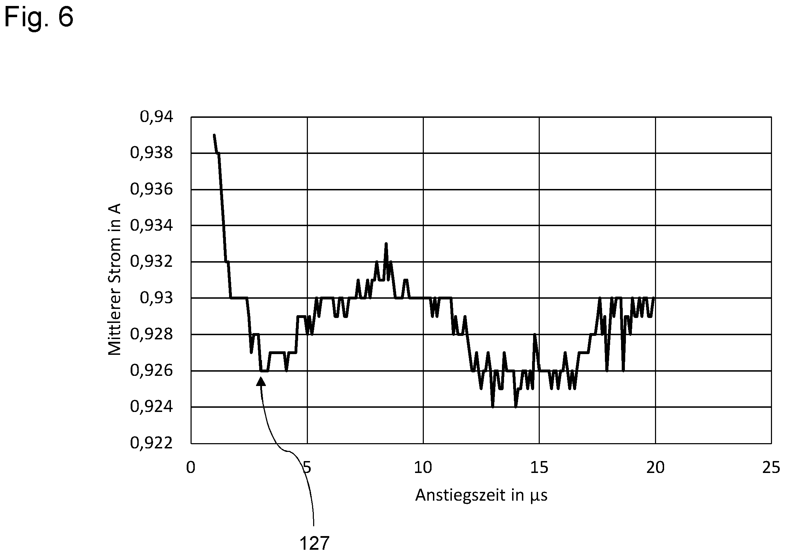

Fig. 6 zeigt einen mittleren erfassten Stromwert bei variierender Anstiegszeit des Spannungsprofils 107. Die Spannungsprofile 107 weisen eine konstante Abfallzeit von 1 µs und konstante Wartezeit von 2.3 µs auf. Die Wiederholrate beträgt 15 kHz.

Die Anstiegszeit des Spannungsprofils 107 wird hingegen zwischen 1 µs und 20 µs verändert (X-Achse). Hierbei wird ein vorgegebenes Spannungsprofil 107 verwendet, dessen Anstiegszeit von dem Minimalwert in kleinen Schritten bis zu dem Maximalwert erhöht wird. Zu jeder Anstiegszeit wird der jeweilige zugehörige mittlere Stromwert erfasst (Y-Achse), der durch das Piezoelement fließt. Alternativ kann auch die Schallamplitude mit einem Mikrofon ermittelt werden.

Die Kurve weist bei einer Anstiegszeit von 3.3 µs ein lokales Minimum 127 für den mittleren Stromwert auf. Das lokale Minimum 127 gibt die optimale Zeit für die Anstiegszeit an, da hier am wenigsten Energie für die Erzeugung des Flüssigkeitstropfens 115 verbraucht wird. Ab diesem Wert ist ein effizientes Spannungsprofil 107 möglich. Wenn diese Anstiegszeit unterschritten wird, ist ein optimales Wirken des Spannungsprofils nicht möglich, da die Schallgeschwindigkeit der Druckflüssigkeit 101 überschritten wird.

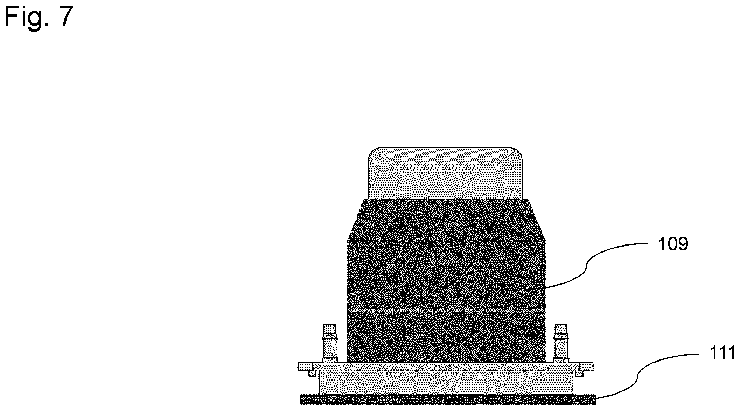

Fig. 7 zeigt eine schematische Ansicht einer Verschlussplatte für den Druckkopf 109. Das Verfahren kann mit geöffneter oder verschlossener Druckdüse 105 durchgeführt werden. Zum Verschließen der Druckdüse 105 kann eine Verschlussplatte 111 verwendet werden, die an dem Druckkopf 109 befestigt wird.

Auch beim Messen mit geschlossener Verschlussplatte kann die Relaxationszeit und die maximale Abfall- und Anstiegszeit ermittelt werden. Wenn eine Verschiebung zwischen offener und geschlossener Verschlussplatte bekannt ist, kann mit einem Korrekturwert korrigiert werden.

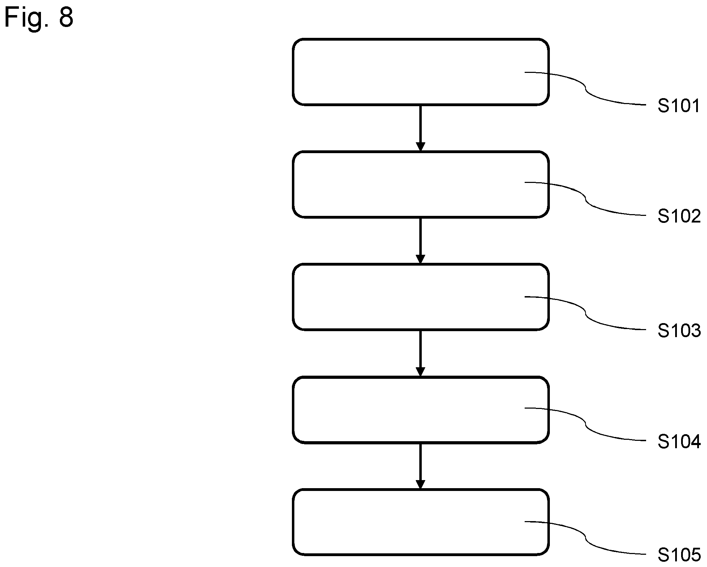

Fig. 8 zeigt ein Blockdiagramm eines Verfahrens zum Einstellen einer Tropfenform einer Druckflüssigkeit. Das Verfahren umfasst die Schritte S101 eines Steuerns des Piezoelementes 103 der Druckdüse 105 durch das erste Spannungsprofil 107 und den Schritt S102 des Erfassens des über das erste Spannungsprofil 107 gemittelten elektrischen Stromwertes oder der über das erste Spannungsprofil 107 gemittelten Schallamplitude.

Anschließend wird in Schritt S103 das Piezoelement 103 der Druckdüse 105 durch das zweite Spannungsprofil 107 gesteuert und in Schritt S104 ein über das zweite Spannungsprofil 107 gemittelter elektrischer Stromwert oder eine über das zweite Spannungsprofil 107 gemittelte Schallamplitude erfasst.

In Schritt S105 wird dasjenige Spannungsprofil 107 mit dem geringeren erfassten Stromwert (lokales Minimum 127) oder der geringeren erfassten Schallamplitude ausgewählt. Das Verfahren bietet nun die Möglichkeit, geeignete Spannungsprofile zum Ausstoßen der Druckflüssigkeit auf einfache Weise zu ermitteln.

Anschließend können die Schritte wiederholt werden, um ein weiteres Spannungsprofil mit einem noch geringeren erfassten Stromwert oder Schallamplitude zu finden. Dies bedeutet, dass verschiedenste Spannungsprofile 107 erzeugt werden und die dabei aufgezeichneten optimalen Werte vom System selbstständig übernommen werden können.

Durch das Verfahren kann eine kostengünstigere Optimierung und Zeitersparnis der Tropfenform auch bei der Verwendung neuer Druckflüssigkeiten erfolgen. Eine Wartung der Druckvorrichtung wird erleichtert. Auf aufwändige Vorrichtungen zur Ermittlung der Tropfenform kann verzichtet werden, so dass sich eine Kostenersparnis bei der Herstellung der Druckvorrichtung ergibt.

Dieses Scannen und Auswerten vereinfachen das Ermitteln eines optimalen Spannungsprofils 107. So kann beispielsweise eine Druckersteuerung selbstständig, ohne eine fotografische Aufnahme der Tropfen (Drop Watching), ein optimales Spannungsprofil 107 ermitteln (Autotuning). Die Anpassung des Spannungsprofils 107 kann erforderlich sein, wenn eine neue Druckflüssigkeit 101 verwendet wird oder der Druckkopf 109 oder die Druckflüssigkeit einer Alterung unterliegt. Dieses Autotuning ermöglicht es der Druckersteuerung, sich selbstständig in diesen Fällen nachzujustieren.

Durch das Verfahren wird eine Vereinfachung eines Einstellens einer Tropfenform erreicht. Des Weiteren ist es möglich, unterschiedliche Parameter aus der Druckvorrichtung 100 zu eruieren, um gegebenenfalls automatisiert Gegenmaßnahmen zu ergreifen. Die von der Druckvorrichtung 100 selbstständig ermittelten Werte können für eine automatische Selbstoptimierung oder ein Autotuning durch eine künstliche Intelligenz von der Druckkopfsteuerung übernommen werden.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Druckvorrichtung
- 101: Druckflüssigkeit
- 103: Piezoelement
- 105: Druckdüse
- 107: Spannungsprofil
- 109: Druckkopf
- 111: Verschlussplatte
- 113: räumliches Objekt
- 115: Flüssigkeitstropfen
- 117: Tintenkammer
- 119: Bauplattform
- 121: Startabschnitt
- 123: Halteabschnitt
- 125: Endabschnitt
- 127: lokales Minimum

## Patentansprüche

1. Verfahren zum Einstellen einer Tropfenform in einem Druckprozess, mit den Schritten:
- Steuern (S101) eines Piezoelementes (103) einer Druckdüse (105) durch ein erstes Spannungsprofil (107);
- Erfassen (S102) eines über das erste Spannungsprofil (107) gemittelten elektrischen Stromwertes oder einer über das erste Spannungsprofil (107) gemittelten Schallamplitude;
- Steuern (S103) des Piezoelementes (103) der Druckdüse (105) durch ein zweites Spannungsprofil (107);
- Erfassen (S104) eines über das zweite Spannungsprofil (107) gemittelten elektrischen Stromwertes oder einer über das zweite Spannungsprofil (107) gemittelten Schallamplitude; und
- Auswählen (S105) desjenigen Spannungsprofils (107, 107) mit dem geringeren erfassten Stromwert oder der geringeren erfassten Schallamplitude.

2. Verfahren nach Anspruch 1, wobei das zweite Spannungsprofil (107) auf Basis des ersten Spannungsprofils (107) bestimmt wird.

3. Verfahren nach einem der vorangehenden Ansprüche, wobei das zweite Spannungsprofil (107) dadurch erzeugt wird, dass eine Anstiegszeit des ersten Spannungsprofils (107) verkleinert oder vergrößert wird.

4. Verfahren nach einem der vorangehenden Ansprüche, wobei das zweite Spannungsprofil (107) dadurch erzeugt wird, dass eine Abfallzeit des ersten Spannungsprofils (107) verkleinert oder vergrößert wird.

5. Verfahren nach einem der vorangehenden Ansprüche, wobei das zweite Spannungsprofil (107) dadurch erzeugt wird, dass eine Haltezeit des ersten Spannungsprofils (107) verkleinert oder vergrößert wird.

6. Verfahren nach einem der vorangehenden Ansprüche, wobei das zweite Spannungsprofil (107) dadurch erzeugt wird, dass eine Haltespannung des ersten Spannungsprofils (107) verkleinert oder vergrößert wird.

7. Verfahren nach einem der vorangehenden Ansprüche, wobei das zweite Spannungsprofil (107) dadurch erzeugt wird, dass eine Haltespannung des ersten Spannungsprofils (107) unverändert bleibt.

8. Verfahren nach einem der vorangehenden Ansprüche, wobei das zweite Spannungsprofil (107) dadurch erzeugt wird, dass eine Haltezeit des ersten Spannungsprofils (107) unverändert bleibt.

9. Verfahren nach einem der vorangehenden Ansprüche, wobei das erste Spannungsprofil (107) ein vorgegebenes Spannungsprofil ist.

10. Verfahren nach einem der vorangehenden Ansprüche, wobei eine Vielzahl von vorgegebenen Spannungsprofilen (107) gespeichert wird.

11. Verfahren nach Anspruch 10, wobei das erste und/oder zweite Spannungsprofil aus der Vielzahl von vorgegebenen Spannungsprofilen ausgewählt wird.

12. Verfahren nach einem der vorangehenden Ansprüche, wobei das Verfahren durchgeführt wird, wenn die Druckflüssigkeit im Druckkopf (109) oder Drucksystem gewechselt wird oder wenn eine vorgegebene Zeit abgelaufen ist.

13. Verfahren nach einem der vorangehenden Ansprüche, wobei das Verfahren ein dreidimensionales Druckverfahren zum Aufbauen eines räumlichen Objektes (113) ist.

14. Verfahren nach einem der vorangehenden Ansprüche, wobei der Druckkopf (109) durch eine Verschlussplatte (111) abgedeckt wird.

15. Druckvorrichtung (100), die ausgebildet ist, das Verfahren nach einem der Ansprüche 1 bis 14 auszuführen.

## Claims

1. A method for setting a drop shape in a printing process, comprising the steps of:
- controlling (S101) a piezo element (103) of a printing nozzle (105) by a first voltage profile (107);
- detecting (S102) an electric current value averaged over the first voltage profile (107) or a sound amplitude averaged over the first voltage profile (107);
- controlling (S103) the piezo element (103) of the printing nozzle (105) by a second voltage profile (107);
- detecting (S104) an electric current value averaged over the second voltage profile (107) or a sound amplitude averaged over the second voltage profile (107); and
- selecting (S105) the voltage profile (107, 107) with the lower detected current value or the lower detected sound amplitude.

2. The method as claimed in claim 1, wherein the second voltage profile (107) is determined based on the first voltage profile (107).

3. The method as claimed in any of the preceding claims, wherein the second voltage profile (107) is generated by decreasing or increasing a rise time of the first voltage profile (107).

4. The method as claimed in any of the preceding claims, wherein the second voltage profile (107) is generated by decreasing or increasing a fall time of the first voltage profile (107).

5. The method as claimed in any of the preceding claims, wherein the second voltage profile (107) is generated by decreasing or increasing a hold time of the first voltage profile (107).

6. The method as claimed in any of the preceding claims, wherein the second voltage profile (107) is generated by decreasing or increasing a holding voltage of the first voltage profile (107).

7. The method as claimed in any of the preceding claims, wherein the second voltage profile (107) is generated by keeping a holding voltage of the first voltage profile (107) unchanged.

8. The method as claimed in any of the preceding claims, wherein the second voltage profile (107) is generated by keeping a hold time of the first voltage profile (107) unchanged.

9. The method as claimed in any of the preceding claims, wherein the first voltage profile (107) is a predetermined voltage profile.

10. The method as claimed in any of the preceding claims, wherein a plurality of predetermined voltage profiles (107) is stored.

11. The method as claimed in claim 10, wherein the first and/or second voltage profile is selected from the plurality of predetermined voltage profiles.

12. The method as claimed in any of the preceding claims, wherein the method is performed when the printing liquid in the print head (109) or printing system is changed or when a predetermined time has elapsed.

13. The method as claimed in any of the preceding claims, wherein the method is a three-dimensional printing method for building a spatial object (113).

14. The method as claimed in any of the preceding claims, wherein the print head (109) is covered by a closure plate (111).

15. A printing device (100) configured to perform the method as claimed in any of claims 1 to 14.

## Revendications

1. Procédé pour le réglage d'une forme d'une goutte dans un processus d'impression, comprenant les étapes suivantes :
- commande (S101) d'un élément piézoélectrique (103) d'une buse d'impression (105) à l'aide d'un premier profil de tension (107) ;
- détection (S102) d'une valeur de courant électrique moyennée par rapport au premier profil de tension (107) ou d'une amplitude sonore moyennée par rapport au premier profil de tension (107) ;
- commande (S103) de l'élément piézoélectrique (103) de la buse à pression (105) par un deuxième profil de tension (107) ;
- détection (S104) d'une valeur de courant électrique moyennée par rapport au deuxième profil de tension (107) ou d'une amplitude sonore moyennée par rapport au deuxième profil de tension (107) ; et
- sélection (S105) du profil de tension (107, 107) présentant la valeur de courant détectée la plus faible ou l'amplitude sonore détectée la plus faible.

2. Procédé selon la revendication 1, où le deuxième profil de tension (107) est déterminé sur la base du premier profil de tension (107).

3. Procédé selon l'une des revendications précédentes, où le deuxième profil de tension (107) est généré en réduisant ou en augmentant un temps de montée du premier profil de tension (107).

4. Procédé selon l'une des revendications précédentes, où le deuxième profil de tension (107) est généré en réduisant ou en augmentant un temps de descente du premier profil de tension (107).

5. Procédé selon l'une des revendications précédentes, où le deuxième profil de tension (107) est généré en réduisant ou en augmentant un temps de maintien du premier profil de tension (107).

6. Procédé selon l'une des revendications précédentes, où le deuxième profil de tension (107) est généré en réduisant ou en augmentant une tension de maintien du premier profil de tension (107).

7. Procédé selon l'une des revendications précédentes, où le deuxième profil de tension (107) est généré en laissant inchangée une tension de maintien du premier profil de tension (107).

8. Procédé selon l'une des revendications précédentes, où le deuxième profil de tension (107) est généré en laissant inchangée une durée de maintien du premier profil de tension (107).

9. Procédé selon l'une des revendications précédentes, où le premier profil de tension (107) est un profil de tension prédéfini.

10. Procédé selon l'une des revendications précédentes, où une pluralité de profils de tension prédéfinis (107) sont enregistrés.

11. Procédé selon la revendication 10, où le premier et/ou le deuxième profil de tension sont sélectionnés parmi la pluralité de profils de tension prédéfinis.

12. Procédé selon l'une des revendications précédentes, où le procédé est mis en œuvre lorsque le liquide d'impression dans la tête d'impression (109) ou le système d'impression est remplacé ou lorsqu'un temps prédéfini s'est écoulé.

13. Procédé selon l'une des revendications précédentes, où le procédé est un procédé d'impression tridimensionnelle pour la construction d'un objet spatial (113).

14. Procédé selon l'une des revendications précédentes, où la tête d'impression (109) est recouverte d'une plaque de fermeture (111).

15. Dispositif d'impression (100) conçu pour exécuter le procédé selon l'une des revendications 1 à 14.
